# EUROPÄISCHE PATENTANMELDUNG

(11) **EP 1 331 578 A2**
(43) Veröffentlichungstag der Anmeldung: **30.07.2003**
(21) Anmeldenummer: 03000160.6
(22) Anmeldetag: 07.01.2003
(51) Int. Cl.: G06F 17/30

(54) **Vorladbarer Dokumentenpuffer in Datenstationen**

(30) Priorität: 25.01.2002 DE 10203181
(71) Anmelder: Wincor Nixdorf International GmbH, 33106 Paderborn (DE)
(72) Erfinder: Luecking, Oliver, 33102 Paderborn (DE)

(57) **Zusammenfassung**

Puffersteuerung (21) für eine Datenstation (20), die von einem Anzeigeprogramm für Dokumente einer Markierungssprache mit eingebetteten Ablaufprogrammen (23, 25) einen globalen Verweis auf ein über ein Datennetzwerk (10) erreichbares Dokument erhält, dieses abruft, in dem Dateisystem ablegt und statt des globalen Verweises zukünftig der auf das Dateisystem gerichtete lokale Verweis verwendet wird.

## Beschreibung

Die Erfindung betrifft einen Puffer für Datenstationen, in denen durch ein Anzeigeprogramm Dokumente einer Markierungssprache (markup language) angezeigt werden, die eingebettete Ablaufprogramme enthalten.

Für eine Vielzahl von Anwendungen ist der Zugriff von einer Datenstation auf Daten eines Servers mit dem Protokoll 'http' und einem Anzeigeprogramm (Browser) weit verbreitet. Um die Funktionalität der dabei überwiegend verwendeten Markierungssprache HTML zu erweitern, ist das Einfügen von Programmschnipseln möglich. Hierzu wird einerseits JAVASCRIPT (ECMA-262) verwendet, welches direkt auf den Elementen der Markierungssprache arbeitet und mit diesen vermischt ist. Zum anderen werden vollständige Programmteile eingebettet, insbesondere in der bekannten Programmiersprache JAVA der Fa. Sun Microsystems Inc., USA. Dadurch ist es möglich, eine Anwendung zu erstellen, bei der die Ablaufsteuerung durch Elemente von JAVASCRIPT und JAVA erfolgt.

Solche Anwendungen greifen in der Regel über ein Datennetzwerk von mehreren Datenstationen auf einen oder mehrere Server zu, auf denen die variablen Daten gehalten werden. Einer der Vorteile dieser Form der Anwendungsprogrammierung ist dabei, dass auch die Masken und die Ablaufsteuerung auf dem Server liegen und damit leicht aktualisierbar sind.

In manchen Anwendungsbereichen ist jedoch der ständige Netzwerkzugriff für den Abruf selten veränderter Daten wie Masken und Ablaufsteuerung störend. Daher enthalten praktisch alle Browser einen Pufferspeicher (cache), in dem einmal abgerufene Dokumente abgelegt und bei erneutem Abruf nicht über das Netzwerk, sondern direkt von dem Pufferspeicher aus verwendet werden. Obwohl hierdurch vielfach die Netzlast reduziert wird, ist eine Verbesserung sinnvoll.

Zum einen ist die Cache-Strategie der bisherigen Browser nur grob konfigurierbar. Zwar bietet das HTTP-Protokoll eine Aktualitätsabfrage ('if-modified-since'-header), mit der ein Transfer der Inhalte vermieden wird, wenn das Dokument unverändert ist. Diese kann jedoch nur für alle Dokumente eingestellt werden und bedeutet gegebenenfalls immer noch die Netzlast für die Aktualitätsabfrage. Ferner ist die Strategie durch Puffern auf Abruf ('on demand cache') fest vorgegeben und ein selektives Löschen von Einträgen nicht möglich; auch ist ein Löschen des Caches nur durch interaktive Eingaben vorgesehen. Ein 'caching proxy' mit vielfältigen Möglichkeiten ist in der Patentschift US 6,049,821 beschrieben.

Weiterhin ergeben sich Probleme aus den für den allgemeinen Gebrauch sinnvollen Sicherheitseinschränkungen. Danach kann ein über das Netzwerk erhaltenes JAVASCRIPT Programm nur den Abruf von Dokumenten von demselben Sever aktivieren, von dem es selbst stammt. Entsprechend kann ein über das Netzwerk abgerufenes JAVA Programm nur Netzwerkverbindungen zu dem Server aktivieren, von dem es selbst stammt. Gerade bei der Verwendung in Transaktionsterminals ist es jedoch sinnvoll, den Sever für die variablen Daten von dem Server für Masken und Ablaufsteuerung zu trennen. Für dieses Umfeld wird in der Patentschrift US 6,324,574 eine Lösung beschrieben, die jedoch eher zusätzliche Netzlast erzeugt.

Die Erfindung erreicht eine Verbesserung dadurch, daß auf demselben Rechner, auf dem auch das Anzeigeprogramm ausgeführt wird, ein von dem internen Puffer des Browsers getrennter zweiter Puffer mit zugehöriger Puffersteuerung vorgesehen ist. Als Puffer wird das ohnehin vorhandene Dateisystem der Datenstation verwendet. Die Puffersteuerung erfolgt aus einem Anlaufprogramm eines von dem Browser angezeigten Dokuments aus und bewirkt Ablegen der Seiten in dem Dateisystem der Datenstation. In dem auf das Anlaufprogramm folgende Ablaufprogramm werden dann die Verweise auf die über das Datennetzwerk erreichbaren Dokumente durch solche ersetzt, die direkt auf das Dateisystem zugreifen. Die Erfindung betrifft insbesondere das in der Veröffentlichung WO 01/86402 beschriebene Vorgehen, bei dem in einem (Teil-) Fenster eine Ablaufsteuerung und dem anderen die Benutzerschnittstelle vorhanden sind.

Es handelt sich also um eine Puffersteuerung für eine Datenstation, die von einem Anzeigeprogramm für Dokumente einer Markierungssprache mit eingebetteten Ablaufprogrammen einen globalen Verweis auf ein über ein Datennetzwerk erreichbares Dokument erhält, dieses abruft, in dem Dateisystem ablegt und statt des globalen Verweises zukünftig der auf das Dateisystem gerichtete lokale Verweis verwendet wird.

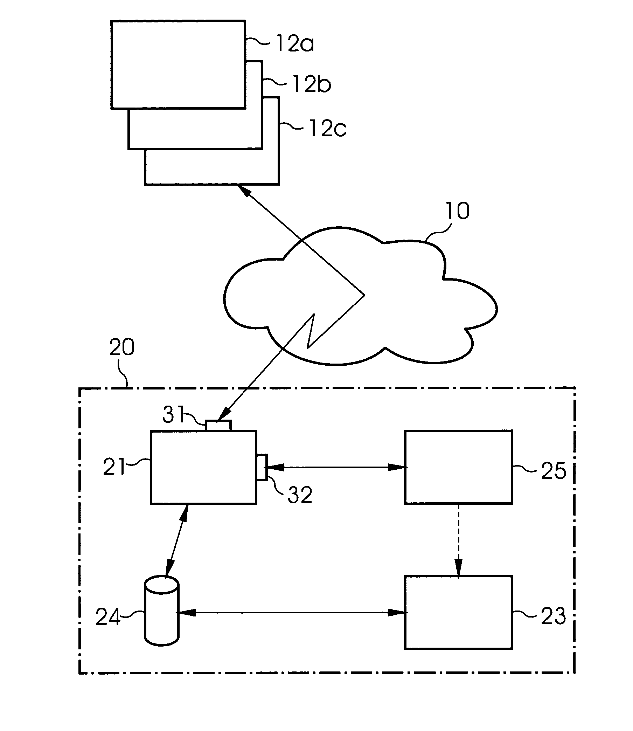

In Fig. 1 ist schematisch eine für die Erfindung typische Konfiguration dargestellt.

Ein Netzwerk 10 wie das Internet erlaubt es einem Gerät 20, z.B. einem Transaktionsterminal, auf Server 12a, 12b, 12c zuzugreifen.

Innerhalb des Geräts 20 befindet sich eine Puffersteuerung 21. Diese hat eine Netzschnittstelle 31, mittels derer über das (Intenet-) Netzwerk 10 von mit einem oder mehreren Servern 12a, 12b, 12c Netzdokumente abgerufen werden können. Hierbei werden bevorzugt das verbreitete Dokumentenformat HTML und das Protokoll HTTP/HTTPS verwendet.

Die Puffersteuerung 21 hat ferner eine Klientenschnittstelle 32, über die die Adressen von Netzdokumenten eingegeben werden. Diese Klientenschnittstelle ist von einem Anwendungsprogramm 25 aus erreichbar, das als Teil eines von einem Browser (nicht gezeigt) angezeigten Dokuments ausgeführt wird. Hierfür eignet sich gut ein JAVA-Applet. In diesem Fall ist die Puffersteuerung 21 als ladbare Klassenbibliothek ausgeführt, so daß die Schnittstelle über den Klassenlader angesprochen wird.

Erhält die Puffersteuerung über die Klientenschnittstelle 32 einen globalen Verweis auf ein Dokument, so fordert sie dieses Dokument über die Netzschnittstelle 31 an. Ein solcher globaler Verweis lautet beispielsweise
http://server.Company.com/app/form17.html
oder
http://server.company.com/app/java/prog17.java

Das angeforderte Dokument wird nach Erhalt von der Puffersteuerung 21 in dem lokalen Dateisystem 24 in einer Datei abgelegt, beispielsweise unter dem Dateinamen
c:\cache\server.company.com\app\form17.html

Die Erfindung nutzt aus, daß die gängigen Browser eine Bezugnahme auf eine solche Datei über eine spezielle URL erlauben, beispielsweise
file:///C:/cache/server.company.com/app/form17.html

Ein solcher lokaler Verweis wird über die Klientenschnittstelle an das im Browser in Ausführung befindliche Anwendungsprogramm, hier das JAVA-Applet, zurückgegeben. Dieses kann nunmehr entweder selbst darauf zugreifen oder diesen lokalen Verweis über die als 'live interconnect' bezeichnete Kopplung zwischen JAVA und JAVASCCRIPT an eine Anwendung 23 weiterreichen; siehe hierzu auch die o.g. WO 91/86402.

Die Puffersteuerung 21 kann auch ein eigenständiges Hintergrundprogram, 'daemon' oder 'sevice' genannt, sein, bei dem die Klientenschnittstelle über Interprozesskommunikation, insbesondere auch über TCP/IP-Ports, realisiert wird. Dies ist insbesondere dann zweckmäßig, wenn eine andere Programmiersprache als im Browser verwendet werden soll, z.B. Perl statt JAVA.

Anstelle dessen, das die Puffersteuerung 21 den lokalen Verweis zurückgibt, kann dieser auch in kanonischer Weise, wie im obigen Beispiel bereits angedeutet, gebildet werden. Im Beispiel wird der Prefix 'http://' ersetzt durch 'file:///C:/cache/'. Dies ist insbesondere dann zweckmäßig, wenn die Klientenschnittstelle nicht für die Rückgabe von Zeichenketten geeignet ist.

In einer Variante erhält die Puffersteuerung beim Start eine Liste von vorab zu ladenden globalen Verweisen. Die entsprechenden Dokumente werden dann bereits beim Programmstart angefordert und in dem Dateisystem 24 aktualisiert. Diese Liste kann auch eine Tabelle sein, die einem globalen Verweis den Dateinamen bzw. lokalen Verweis fest zuordnet.

In diesem Fall kann die gesamte Anwendung 23 von vornherein lediglich lokale Verweise in Form von Dateibezügen verwenden. Bei Anwendungen mit hohen Anforderungen an Fehlerfreiheit muß ohnehin dokumentiert sein, welche Verweise verwendet werden, so daß eine Konkordanz von lokalen Verweisen zu globalen Verweisen ohnehin vorhanden ist. Diese Liste (die natürlich auch per rekursivem Abstieg aus dem Dateisystem gewonnen werden kann) wird dann der Puffersteuerung zur Verfügung gestellt.

In allen Fällen wird bevorzugt bei Verwendung des Protokolls HTTP auf der Netzschnittstelle mittels des 'header' 'ifmodified-since' (siehe RFC 2068) und des in dem Dateisystem abgelegten Datums der letzten Veränderung nicht immer das Dokument neu geladen, sondern zunächst nur geprüft, ob auf dem Server überhaupt ein aktualisiertes Exemplar vorliegt. Ist das nicht der Fall, braucht die gepufferte Version nicht aufgefrischt zu werden.

In einer Weiterbildung der Erfindung verwendet die Puffersteuerung, gegebenenfalls einstellbar über Parameter, anstelle des in dem globalen Verweis vorgegebene Protokolls eine anderes Protokoll. Besonders interessant ist der Austausch von 'http:' nach 'https:', d.h. die erzwungene Verwendung einer kryptographisch gesicherten Verbindung. Bislang erfordert dies die Wartung aller absoluten Verweise in allen Dokumenten einer Applikation und ist daher nicht fallweise einstellbar. Damit wird auch erreicht, daß der höhere Aufwand für die sicherer Verbindung mit 'https' nur bei Abruf über das allgemeine Netzwerk 10 verwendet wird. Außerdem sind die notwendigen Schlüssel so zentral in nur einer Komponente gespeichert.

In einer Variante wird die Abfrage, ob ein neues aktuelles Dokument vorliegt, per HTTP durchgeführt, aber durch einen passenden Header-Eintrag eine Übermittlung des Dokuments verhindert. Dieses wird dann mittels HTTPS angefordert.

## Patentansprüche

1. Puffersteuerung (21) für eine Datenstation (20), welche umfaßt
- ein Anzeigeprogramm für Dokumente einer Markierungssprache mit eingebetteten Ablaufprogrammen (23, 25) sowie
- einen Anschluß an ein Datennetzwerk (10) und ein Dateisystem (24),
wobei die von dem Anzeigeprogramm getrennte Puffersteuerung (21)
- eine Klientenschnittstelle (32) hat, die von dem Ablaufprogramm (23, 25) erreichbar ist und über die sie einen globalen Verweis auf ein über das Datennetzwerk (10) erreichbares Dokument erhält,
- mit dem Erhalt des globalen Verweises das durch den globalen Verweis bezeichnete Dokument über eine Netzschnittstelle (31) abruft und in dem Dateisystem ablegt,
- einen lokalen Verweis auf das abgelegte Dokument erzeugt und das Ablaufprogramm (23, 25) diesen lokalen Verweis anstelle des globalen Verweises verwendet.

2. Puffersteuerung nach Anspruch 1, wobei die Puffersteuerung und das Ablaufprogramm dieselbe Programmiersprache verwenden und die Klienteschnittstelle durch einen Unterprogramm- oder Methodenaufruf realisiert ist.

3. Puffersteuerung nach einem der vorigen Ansprüche, wobei der lokale Verweis durch einen vorbestimmten Algorithmus aus dem globalen Verweis gebildet wird

4. Puffersteuerung nach einem der vorigen Ansprüche, wobei die Puffersteuerung beim Start ein Liste von globalen Verweisen erhält, die behandelt werden, als würden sie über die Klientenschnittstelle angefordert.

5. Puffersteuerung nach einem der vorigen Ansprüche, wobei die Puffersteuerung das Abrufprotokoll in dem globalen Verweis ändert, insbesondere 'http:' nach 'https:'.

6. Datenstation mit einer Puffersteuerung nach einem der vorherigen Ansprüche.

7. Steuermethode in einem Computersystem, welches umfaßt
- ein Anzeigeprogramm für Dokumente einer Markierungssprache mit eingebetteten Ablaufprogrammen,
- einen Anschluß an ein Datennetzwerk und ein Dateisystem
- sowie eine Puffersteuerung mit einer Netzschnittstelle und einer Klientenschnittstelle,
mit den Schritten:
- in dem Anzeigeprogramm wird ein Dokument aktiviert, welches ein Ablaufprogramm enthält,
- das Ablaufprogramm sendet an die Klientenschnittstelle des Puffersteuerung einen globalen Verweis auf ein über das Datennetzwerk erreichbares Dokument,
- die Puffersteuerung ruft das durch den globalen Verweis bezeichnete Dokument über die Netzschnittstelle ab und legt es in dem Dateisystem ab,
- die Puffersteuerung gibt einen auf das Dateisystem bezogenen lokalen Verweis auf das abgelegte Dokument an das Ablaufprogramm zurück,
- das Ablaufprogramm verwendet den lokalen Verweis zum Anzeige des Dokuments mittels des Anzeigeprogramms.

8. Programmprodukt, auf das einer der vorhergehenden Ansprüche zutrifft.
